# EUROPÄISCHE PATENTSCHRIFT

(11) **EP 1 079 405 B1**
(45) Veröffentlichungstag und Bekanntmachung des Hinweises auf die Patenterteilung: **12.12.2001**
(21) Anmeldenummer: 99116033.4
(22) Anmeldetag: 16.08.1999
(51) Int. Cl.: H01H 35/14, B60R 21/00

(54) **Fahrzeug-Verformungs-Sensor**
Vehicle crash sensor
Détecteur de déformation pour véhicule

(43) Veröffentlichungstag der Anmeldung: 28.02.2001
(73) Patentinhaber: Ford Global Technologies, Inc., A subsidiary of Ford Motor Company, Dearborn, Michigan 48126 (US)
(72) Erfinder: Hagen, Markus, 50769 Köln (DE); Schondorf, Steven Yellin, Dearborn, MI 48126 (US); Brosig, Ralf, 50829 Köln (DE)
(74) Vertreter: Messulam, Alec Moses

(56) Entgegenhaltungen:
- WO-A-90/03040
- DE-A- 3 729 021
- DE-C- 4 308 353
- FR-A- 2 671 525
- US-A- 3 905 015

## Beschreibung

Die Erfindung bezieht sich auf einen Fahrzeug-Verformungs-Sensor, der im Oberbegriff des Patentanspruches 1 erläuterten Art.

Aus der DE 43 08 353 ist ein Fahrzeug-Verformungs-Sensor gemäß dem Oberbegriff des Patentanspruches bekannt. Allerdings ist der Sensor als eigenständige Einheit aufgebaut und wird an den entsprechenden Stellen im Fahrzeug, wo die Verformung erfaßt werden soll, angebracht. Dadurch kann der Sensor nur eine bestimmte Größe aufweisen, wodurch nur ein kleiner Bereich am Fahrzeug bezüglich Verformung überwacht werden. Weiterhin stellt der Sensor einen zusätzlichen Bauaufwand dar.

Eine weitere Version des Fahrzeug-Verformungssensors gemäß dem Oberbegriff des Patentanspruches ist in der DE 37 29 021 offenbart. Eine Vielzahl von Einzelsensoren sind auf dem Innenblech einer Fahrzeugtür aufgebracht und erfassen das Einbeulen des Außenbleches der Fahrzeugtür, wobei ein Sensor jeweils die Kapazitätsänderung in seinem Bereich erfaßt. Die Anwendung ist dabei nicht auf die Fahrertür beschränkt, sondern die Sensoren können an allen Karosserieteilen angeordnet sein, die im Falle eines Unfalles eine Verformung erfahren. Der Bauaufwand und die Störanfälligkeit durch die Vielzahl der benötigten Sensoren sind hier erheblich.

Die Aufgabe der Erfindung ist es, einen Fahrzeug-Verformlungs-Sensor der im Oberbegriff des Patentanspruches erläuterten Art derart zu verbessern, daß bei einfachem Aufbau eine zuverlässige und deutliche Signalabgabe erzielt werden kann.

Gemäß der Erfindung wird diese Aufgabe gelöst, indem ein Fahrzeug-Verformungs-Sensor der im Oberbegriff des Patentanspruches erläuterten Art die im Kennzeichenteil des Patentanspruches aufgezeigten Merkmale aufweist.

Die Erfindung wird anhand eines schematisch dargestellten Ausführungsbeispieles näher erläutert. Es zeigt:
- Fig. 1: einen Fahrzeug-Verformungs-Sensor nach dem Oberbegriff des Patentanspruches im unbelasteten, unverformten Zustand und
- Fig. 2: den Fahrzeug-Verformungs-Sensor aus Figur 1 im belasteten, verformten Zustand.

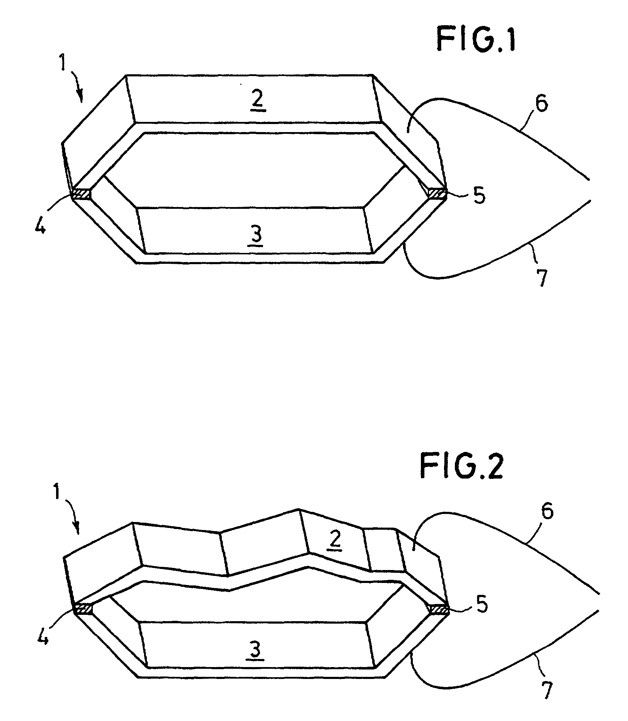

Der in den Figuren 1 und 2 mit 1 bezeichnete Fahrzeug-Verformungs-Sensor 1 besteht im wesentlichen aus zwei flächigen elektrischen Leitern 2 und 3, die einander gegenüberliegend angeordnet und durch Isolatoren 4 und 5 voneinander elektrisch isoliert sind.

Die beiden flächigen Leiter 2 und 3 sind über elektrische Leitungen 6 und 7 mit einer elektronischen Auswerteinheit (nicht gezeigt) verbunden.

Über die elektrischen Leitungen 6 und 7 wird der Fahrzeug-Verformungs-Sensor 1 mit einem geeigneten Impuls beaufschlagt, der bei unverformtem Zustand des Fahrzeug-Verformungs-Sensor 1 eine der Kapazität entsprechende Signalantwort an die elektronische Auswerteinheit abgibt.

Wird nun im Falle eines Unfalles der im verformbaren Bereich des Fahrzeuges angeordnete Fahrzeug-Verformungs-Sensor 1 wie in Fig. 2 gezeigt verformt, so ändert sich die Impedanz der Anordnung und es erfolgt eine sich ändernde Signalantwort, die von der elektronischen Auswerteinheit ausgewertet werden kann, um eine Sicherheitseinrichtung zu aktivieren.

Der Vorteil dieses Fahrzeug-Verformungs-Sensors liegt darin, daß die zwischen den beiden flächigen Leitern 2 und 3 anliegende Kapazität sich in Abhängigkeit von der Stärke der Verformung fortlaufend ändert, so daß die entsprechende Rückmeldung an die elektronische Auswerteinheit ein Maß für die Größe der stattgefundenen Verformung abgeben kann.

Ein erfindungsgemäßes Ausführungsbeispieles des Fahrzeug-Verformungs-Sensors besteht darin, daß das Außenblech und Innenblech einer Fahrzeugtür gegeneinander isoliert sind und so die Fahrzeugtür einen großformatigen Kondensator bildet, dessen Kapazitätsänderung durch die elektronische Auswerteinrichtung überwacht werden kann.

Schwankungen der Kapazität infolge von Temperaturänderungen, Feuchtigkeitsänderungen oder durch Ab- und Aufbewegungen der versenkbaren Scheibe in der Fahrzeugtür können durch einfache Zeitalgorithmen in der elektronischen Auswerteinheit herausgefiltert werden. Der Vorteil des Fahrzeug-Verformungs-Sensors liegt darin, daß er eine Ansprechzeit in der Größe von Mikro- oder Millisekunden hat. Bei den oben genannten Schwankungen der Kapazität handelt es sich hingegen um langsame Änderungen.

Sollte sich die Isolierung des Außenbleches zum Innenblech der Fahrzeugtür als zu aufwendig herausstellen, so kann ein großflächiger Kondensator auch in Form von auf die entsprechenden Außenbleche und Innenbleche der Fahrzeugtür isoliert aufgebrachte elektrische Folien gebildet werden, wobei die Kapazität zwischen den beiden Folienabschnitten überwacht wird.

In einer dritten Ausführungsform kann der erfindungsgemäße Fahrzeug-Verformungs-Sensor in einer Fahrzeugtür-Kassetten-Anordnung integriert sein, wobei die Kassetten-Anordnung alle beweglichen Teile der Fahrzeugtür, wie z.B. die Fensterhebelanordnung aufweist.

## Patentansprüche

1. Fahrzeug-Verformungs-Sensor (1), mit in bei einem Unfall verformbaren Bereich des Fahrzeuges angeordneten elektrischen Leitern (2 und 3), die in einem bestimmten Abstand zueinander angeordnet sind und mit einer elektronischen Auswerteinheit verbunden sind, die sowohl die relative Verlagerung der beiden elektrischen Leiter (2 und 3) als auch die Geschwindigkeit der Verlagerung erfassen kann, die beiden flächigen, elektrischen Leiter (2 und 3) einander gegenüberliegend nach Art eines Kondensators angeordnet sind,die flächigen, elektrischen Leiter (2 und 3) mit einem geeigneten Impuls beaufschlagt werden und die Kapazität über elektrische Leitungen (6 und 7) der elektronischen Auswerteinheit zugeführt werden und die sich bei einer fortschreitenden Verformung ändernde Kapazität von der elektronischen Auswerteinheit erfaßt, verarbeitet und zur Auslösung einer Sicherheitseinrichtung bereitgestellt wird.
**dadurch gekennzeichnet, daß**
die beiden flächigen, elektrischen Leiter (2 und 3) von dem gegeneinander isolierten Außenblech und Innenblech einer Fahrzeugtür gebildet werden.

## Claims

1. Vehicle crash sensor (1) with electrical wires (2 and 3) arranged in the area of the vehicle which can be deformed in the event of an accident, wherein these electrical wires (2 and 3) are arranged at a certain distance from each other and are connected with an electronic evaluation unit, which can register both the relative displacement of the two electrical wires (2 and 3) and the speed of the displacement, with the two flat electrical wires (2 and 3) lying opposite each other in the form of a condenser, the flat electrical wires (2 and 3) are impacted with an appropriate pulse and the capacity is fed over electrical wires (6 and 7) to the electronic evaluation unit and the changing capacity in the event of a continuing deformation is registered and processed by the electronic evaluation unit and made available by the same to trigger off a safety device,
**characterised in that**
the two flat electrical wires (2 and 3) are formed from the outer panel and inner panel of a vehicle door which are isolated from each other.

## Revendications

1. Détecteur de déformation pour véhicule (1) muni de conducteurs plats (2 et 3) électriques installés dans la partie déformable en cas d'accident d'un véhicule, et placés à une certaine distance l'un par rapport à l'autre et raccordés à une unité d'exploitation électronique qui peut détecter aussi bien le déplacement relatif des deux conducteurs électriques (2 et 3) que la vitesse du déplacement, les deux conducteurs plats (2 et 3) électriques étant placés l'un en face de l'autre à la manière d'un condensateur, les deux conducteurs plats électriques (2 et 3) étant alimentés par une impulsion adaptée et la capacité étant amenée à l'aide de lignes électriques (6 et 7) de l'unité d'exploitation électronique et la capacité se modifiant lors d'une déformation progressive étant saisie par l'unité d'exploitation électronique, traitée et mise à la disposition d'un dispositif de sécurité, **caractérisé en ce que** les deux conducteurs plats électriques (2 et 3) sont formés par la tôle extérieure et la tôle intérieure d'une portière de véhicule isolées l'une par rapport à l'autre.
